# EUROPÄISCHE PATENTSCHRIFT

(11) **EP 3 877 306 B1**
(45) Veröffentlichungstag und Bekanntmachung des Hinweises auf die Patenterteilung: **23.04.2025**
(21) Anmeldenummer: 19778943.1
(22) Anmeldetag: 24.09.2019
(51) Int. Cl.: B65G 47/08, B65G 47/71, B65G 47/82, B65G 54/02

(54) **VORRICHTUNG ZUM GRUPPIEREN VON BEHÄLTERN**
DEVICE FOR GROUPING CONTAINERS
DISPOSITIF POUR REGROUPER DES CONTENANTS

(30) Priorität: 08.11.2018 DE 102018219082
(43) Veröffentlichungstag der Anmeldung: 15.09.2021
(73) Patentinhaber: Krones AG, 93073 Neutraubling (DE)
(72) Erfinder: SENN, Konrad, 93073 Neutraubling (DE); ROITHMEIER, Andreas, 93073 Neutraubling (DE); SCHUESSLBURNER, Helmut, 93073 Neutraubling (DE)
(74) Vertreter: Grünecker Patent- und Rechtsanwälte PartG mbB
(86) Internationale Anmeldenummer: PCT/EP2019/075700
(87) Internationale Veröffentlichungsnummer: WO 2020/094289

(56) Entgegenhaltungen:
- WO-A1-2019/129968
- DE-A1- 102012 201 059
- DE-A1- 102015 203 042
- DE-C1- 19 719 957
- DE-U- 6 606 997
- DE-U1- 202016 101 207
- FR-A1- 2 607 481
- US-A- 2 080 858
- US-A- 2 203 385
- US-A- 3 708 052
- US-A- 3 771 648
- US-A- 3 987 889
- GEBO CERMEX: "AQFlex XS: advanced performance and unique agility in a compact design", YOUTUBE, 5 May 2017 (2017-05-05), pages 5 pp., XP054978684, Retrieved from the Internet <URL:https://www.youtube.com/watch?v=prxl8DnJjTw> [retrieved on 20180913]

## Beschreibung

### Gebiet der Erfindung

Die vorliegende Erfindung betrifft eine Vorrichtung zum Gruppieren transportierter Behälter, beispielsweise Flaschen, insbesondere in einer Behälterbehandlungsanlage.

### Stand der Technik

In Behälterbehandlungsanlagen werden Behälter, wie z. B. Flaschen, Dosen, usw., in mehreren aufeinanderfolgenden Prozessschritten behandelt. Dabei werden im Allgemeinen die Prozessschritte in separaten Behandlungseinheiten durchgeführt, die beispielsweise als Module eines gemeinsamen Anlagenkonzepts zusammengestellt werden können. Eine Behälterbehandlungsanlage für Glasflaschen oder Kunststoffflaschen, z. B. aus Polyethylenterephthalat (PET), Polypropylen (PEP), usw., kann beispielsweise eine Blasformeinrichtung, Füllvorrichtung, Etikettiervorrichtung, Verpackungsvorrichtung, Sterilisationsvorrichtung, Inspektionsvorrichtung, usw. als separate, modular ausgeführte Behandlungseinheiten umfassen. Die einzelnen Behandlungseinheiten, welche aufeinanderfolgende Prozessschritte durchführen, sind dabei im Allgemeinen in Reihe hintereinander geschaltet, wobei eine oder mehrere Transportvorrichtungen den Transport der Behälter von den Behandlungseinheiten zu den jeweiligen nachgeschalteten Behandlungseinheiten übernehmen.

Die Durchführung aufeinander folgender Prozessschritte durch die separaten Behandlungseinheiten der Anlage sowie der Transport zwischen den Behandlungseinheiten entspricht somit dem bekannten Prinzip der Fließbandverarbeitung, bei der ein kontinuierlicher Fluss von zu behandelnden Behältern durch die in Serie angeordneten Behandlungseinheiten mittels geeigneter Steuerungsprozesse bezüglich der Prozessdauer der einzelnen Prozessschritte und/oder der Menge der pro Zeiteinheit von einer Behandlungseinheit zur nächsten Behandlungseinheit transportierten Behälter erreicht wird. Bei den im Stand der Technik bekannten Anlagen wird der Transport der Behälter zwischen den Behandlungseinheiten mittels Transportbändern und gegebenenfalls mittels einer Vielzahl separater Transportelemente in Form von Trägern realisiert, welche die Behälter oder Vorformlinge mittels geeigneter Haltevorrichtungen, z. B. speziell geformter Greifeinheiten, bei einer Aufnahmestelle aufnehmen, durch die Reihe der aufeinander folgenden Behandlungseinheiten transportieren und schließlich an einer Abgabestelle abgeben. Die Behälter werden dabei im Allgemeinen durch geeignet ausgestaltete Zuförderer an den Aufnahmestellen an die Vielzahl der Transportelemente übergeben und entsprechend durch geeignet ausgestaltete Abförderer an den Abgabestellen von der Vielzahl der Transportelemente übernommen. Sowohl die Zuförderer und Abförderer als auch die einzelnen Behälterbehandlungseinheiten fördern bzw. behandeln die Behälter mit einer jeweils in Abhängigkeit von dem zu behandelnden Behälter, dem Prozessschritt und/oder der durchführenden Behandlungseinheit vom Betreiberpersonal oder einer Steuereinrichtung vorgegebenen Rate an Behältern pro Zeiteinheit.

In der DE 20 2016 101207 U1 wird eine Transportvorrichtung mit einer Umsetzführung, die ein Umsetzen von Flaschen quer zu einer Transportrichtung ermöglicht, beschrieben. Insbesondere kann eine Hubvorrichtung zum Anheben und Absenken einer Umsetzführung zum Verschieben der Flaschen senkrecht zu ihrer Transportrichtung auf einem Transportband zu einem zweiten querlaufenden Transportband und einem Stellplatz, der als weiterer Linearförderer ausgebildet sein kann, vorgesehen sein. In der DE 10 2012 201059 A1 , welche den Oberbegriff des Anspruchs 1 offenbart, wird eine Vorrichtung zum Ausleiten von Produkten senkrecht zu einer Transportrichtung auf einem Transportband mit Hilfe von einem durch einen Linearmotor angetriebenen Schlitten und damit verbundenen Ausleitern beschrieben. In dem Youtube-Video "AQFlex XS: advanced performance and unique agility in a compact design" von Gebo Cermex, 5. Mai 2017, wird eine Portalvorrichtung für eine Motoreinrichtung, die dazu ausgebildet ist, eine Überschubeinrichtung zum Überschieben von Behältern zu bewegen, gezeigt.

Für eine lückenlose und effektive Produktion sollten Behälter in vorgegebenen, konstanten zeitlichen Abständen bzw. bei konstanter, vorgegebener Geschwindigkeit der Transportelemente mit vorgegebenen, konstanten räumlichen Abständen, der sogenannten Teilung eines (Produkt-) Stroms, bei der jeweiligen Behandlungseinheit bzw. Fördereinrichtung anlangen.

Obwohl die Verarbeitungsrate der einzelnen Behandlungseinheiten und/oder die Förderraten der Fördereinrichtungen typischerweise innerhalb gewisser Grenzen steuer- bzw. regelbar sind, führen Abweichungen von der vorgegebenen Rate, d. h. von dem vorgegebenen zeitlichen Abstand bzw. dem vorgegebenen räumlichen Abstand zweier aufeinander folgender Transportelemente, im Allgemeinen zu Produktionsverzögerungen, da die Verarbeitungsraten der einzelnen Behandlungseinheiten nur mit zeitlicher Verzögerung angepasst werden können.

Insbesondere stellen Lücken im ansonsten regelmäßigen Produktionsstrom an Behältern die Steuerung bzw. Regelung von Behandlungseinheiten vor große Schwierigkeiten, da diese bei Auftreten einer Lücke vorübergehend verzögert arbeiten müssen, um anschließend wieder auf Normalgeschwindigkeit gefahren zu werden. Dabei geht im Allgemeinen wertvolle Produktionszeit verloren. Das Entstehen von Lücken in Produktionsstrom von Behälterbehandlungsanlagen ist jedoch ein alltägliches Phänomen, wobei die Lücken z. B. durch Erkennen des Behandlungszustandes von Behältern als fehlerhaft und Ausschleusen der Behälter entstehen.

Andererseits können vorbestimmte Gruppierungen und somit gewünschte Beabstandungen zwischen einzelnen Behältergruppen beabsichtigt sein; solche Gruppierungen sind jedoch im Stand der Technik nicht leicht technisch realisierbar.

Es liegt der vorliegenden Erfindung die Aufgabe zugrunde, eine verbesserte Gruppierung von Behältern auf ihrem Transportweg in einer Behälterbehandlungsanlage zu erreichen.

### Beschreibung der Erfindung

Die oben genannte Aufgabe wird gelöst durch eine Vorrichtung zum Gruppieren von Behältern, mit
einem ersten Transportband zum Transportieren der Behälter in einer ersten Transportrichtung;
einer Behälterannahmeeinrichtung;
einem zweiten Transportband, das zwischen dem ersten Transportband und der Behälterannahmeeinrichtung angeordnet ist;
einer Überschubeinrichtung, die dazu ausgebildet ist, zumindest einige der Behälter quer zu der ersten Transportrichtung von dem ersten Transportband auf das zweite Transportband zu überschieben und zumindest einen Teil der auf das zweite Transportband überschobenen Behälter quer zu der ersten Transportrichtung auf die Behälterannahmeeinrichtung zu überschieben;
einem ersten Schienensystem, das parallel zu der ersten Transportrichtung ausgerichtet ist;
einem zweiten Schienensystem, das parallel zu der ersten Transportrichtung ausgerichtet ist;
einer ersten Motoreinrichtung, insbesondere einer Langstatormotoreinrichtung, die oberhalb des ersten Transportbands, des zweiten Transportbands und der Behälterannahmeeinrichtung angeordnet ist, und die dazu ausgebildet ist, die Überschubeinrichtung zum Überschieben der jeweiligen Behälter zu bewegen, wobei die Überschubeinrichtung ein entlang dem ersten Schienensystem bewegliches erstes Shuttleelement mit einer Anzahl an Eingriffselementen, von denen sich jedes zumindest teilweise quer zu der ersten Transportrichtung erstreckt, umfasst, sodass die Überschubeinrichtung mithilfe der Eingriffselemente zu einer Gruppierung der jeweiligen Behälter auf dem zweiten Transportband und/oder der Behälterannahmeeinrichtung und dem Überschieben der jeweiligen Behälter ausgebildet ist; und
einer zweiten Motoreinrichtung, insbesondere einer zweiten Langstatormotoreinrichtung, die oberhalb des ersten Transportbands, des zweiten Transportbands und der Behälterannahmeeinrichtung und in der ersten Transportrichtung gegenüber der ersten Motoreinrichtung versetzt angeordnet ist und dazu ausgebildet ist, ein zweites Shuttleelement entlang dem zweiten Schienensystem zu bewegen, und wobei das zweite Shuttleelement mit dem ersten Shuttleelement, insbesondere über eine Koppelstange, gekoppelt ist, sodass durch eine Relativbewegung des gekoppelten ersten und zweiten Shuttleelements in der ersten Transportrichtung die Eingriffselemente quer zu der ersten Transportrichtung geführt werden können.

Die Überschubeinrichtung kann dazu ausgebildet sein, die auf das zweite Transportband überschobenen Behälter abzubremsen und/oder entgegen der ersten Transportrichtung zu verschieben und/oder zu gruppieren.

Die oben beschriebenen Beispiele für eine Vorrichtung zum Gruppieren von Behältern können in einer Anlage zum Behandeln von Behältern Verwendung finden.

Mithilfe der oben beschriebenen Ausführungsformen der erfindungsgemäßen Vorrichtung lassen sich Verfahren zum Gruppieren von Behältern und Ausleiten schadhafter Behälter, die keine Manipulation durch die Überschubeinrichtung erfahren und so auf dem ersten Transportband verbleiben, ausführen.

Weitere Merkmale und beispielhafte Ausführungsformen sowie Vorteile der vorliegenden Erfindung sowie Beispiele, die nicht Bestandteil der Erfindung sind, aber deren Verständnis dienen, werden nachfolgend anhand der Zeichnungen näher erläutert. Es versteht sich, dass die Ausführungsformen nicht den Bereich der vorliegenden Erfindung erschöpfen. Es versteht sich weiterhin, dass einige oder sämtliche der im weiteren beschriebenen Merkmale auch auf andere Weise miteinander kombiniert werden können.
Figuren 1a, 1b und 1c stellen eine Vorrichtung zum Gruppieren von Behältern gemäß einem Beispiel, das nicht Bestandteil der vorliegenden Erfindung ist, dar.
Figur 2 zeigt einen Eingriff von Eingriffselementen einer Überschubeinrichtung der in den Figuren 1a, 1b, 1c gezeigten Vorrichtung in einen Behälterstrom.
Figur 3 veranschaulicht einen Überschub von Behältern von einem Einlaufband zu einem Zwischenband der in den Figuren 1a, 1b, 1c gezeigten Vorrichtung.
Figuren 4a und 4b veranschaulichen Gruppierungen auf einer Behälterannahmeeinrichtung der in den Figuren 1a, 1b, 1c gezeigten Vorrichtung.
Figur 5a, 5b, 5c und 5d stellen ein Beispiel einer Vorrichtung zum Gruppieren von Behältern der vorliegenden Erfindung dar.
Figur 6 zeigt einen Eingriff von Eingriffselementen einer Überschubeinrichtung der in den Figuren 5a, 5b, 5c gezeigten Vorrichtung in einen Behälterstrom.
Figur 7 veranschaulicht einen Überschub von Behältern von einem Einlaufband zu einem Zwischenband der in den Figuren 5a, 5b, 5c gezeigten Vorrichtung.
Figur 8 veranschaulicht einen Teil einer Überschubeinrichtung, die in der in Figuren 1a bis 1 und 5a bis 5c gezeigten Vorrichtung Verwendung finden kann.
Figur 9 zeigt Details des in der Figur 8 veranschaulichten Teils einer Überschubeinrichtung.

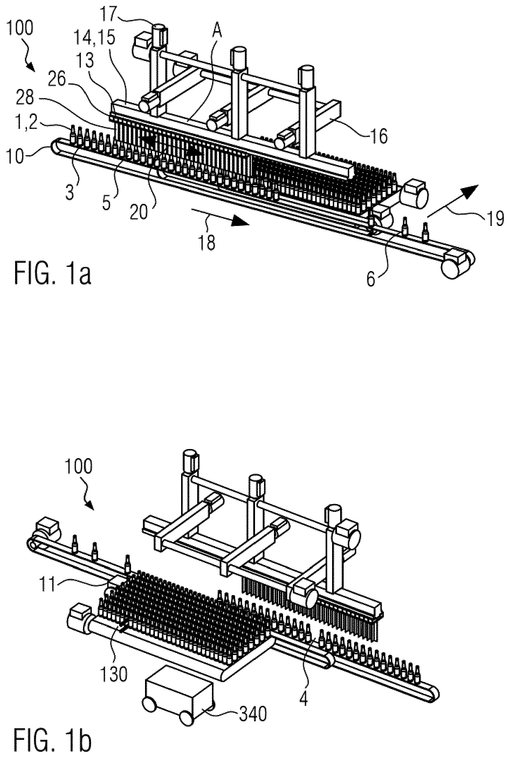

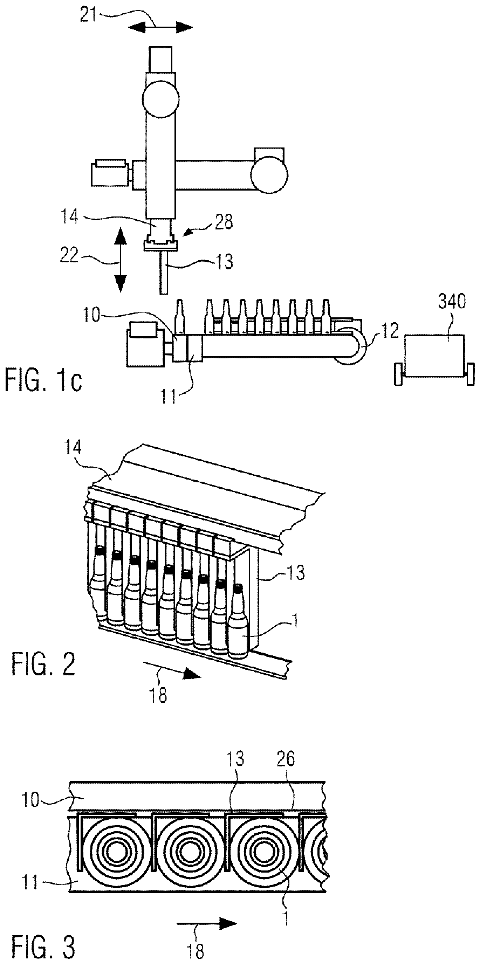

Eine beispielhafte Vorrichtung 100 zum Gruppieren von Behältern, das nicht Bestandteil der vorliegenden Erfindung ist, ist in den Figuren 1a, 1b und 1c gezeigt. Weitere Details sind in den Figuren 2 und 3 gezeigt. Die Vorrichtung umfasst ein erstes Transportband in Form eines Einlaufbands 10, auf dem Behälter 1 eines Behälterstroms 2 zugefördert werden. Individuelle Behälter 1 sind auf dem Einlaufband durch Teilungslücken (eine Behälterteilung) 3 voneinander getrennt. Wie es in Figur 1b gezeigt ist, können größere unerwünschte Lücken 4, beispielsweise durch Verlust von Behältern, in dem Behälterstrom 2 auf dem Einlaufband 10 auftreten. Andererseits ist ein auszuleitender schadhafter Behälter in Figur 1a mit dem Bezugszeichen 5 gekennzeichnet. Das Bezugszeichen 6 in Figur 1 zeigt einen nach der im Folgenden zu beschreibenden Überschiebung/Gruppierung auf dem Einlaufband 10 verbleibenden und somit ausgeleiteten schadhaften Behälter.

Behälter im Sinne der Erfindung sind insbesondere Getränkeflaschen, aber auch andere Behälter für Lebensmittel, Medikamente, Hygieneartikel, Reinigungsmittel oder dergleichen, wie z. B. Dosen, Glasflaschen oder andere Glasbehälter mit Deckel, Verpackungen auf der Basis von Karton oder Verbundstoffen, Tetrapack, oder ähnliches. Die Behälter 1 können schlicht auf dem Einlaufband 10 stehen oder sich auf jeweiligen Transportelementen/Trägern befinden.

Weiterhin umfasst die Vorrichtung 100 ein zweites Transportband (Zwischenband) 11, eine Behälterannahmeeinrichtung (ein Quersystem) 12 und ein über dem Einlaufband 10, dem Zwischenband 11 und der Behälterannahmeeinrichtung 12 angeordnetes Langstatormotorsystem A mit als Überschubeinrichtung 28 fungierenden beweglichen Shuttleelementen 26 mit Eingriffselementen (Paddel) 13, einem Langstatorlinearmotor 14 und einem Schienensystem 15. Die Bewegungsrichtung 20 der Shuttleelemente 26 entspricht der Förderrichtung 18. Das Zwischenband 11 kann mit derselben Geschwindigkeit wie das Einlaufband 10 und parallel zu diesem laufen, und es kann Teil des Einlaufbands 10, beispielsweise eine Verbreiterung desselben, sein oder separat von dem Einlaufband 10 ausgebildet sein.

Die Behälterannahmeeinrichtung 12 umfasst Mittel zum Bewegen überschobener Behälter und diese Mittel können ein Transportband umfassen. Beispielsweise können die überschobenen Behälter auf an einem Transportband der Behälterannahmeeinrichtung 12 befestigten Trageelementen quer zur Transportrichtung 18 (siehe Bezugszeichen 19 in Figur 1a) transportiert und gruppiert werden. Behälter, wie der Behälter 6 in Figur 1, die nicht durch die Eingriffselemente 13 manipuliert werden, verbleiben auf dem Einlaufband 10.

Das Langstatormotorsystem A kann mithilfe eines Portalsystem (Y-Z-Linearachsenportalsystem) 16, 17 vertikal (in z-Richtung; siehe Bezugszeichen 22 in Figur 1c) und quer zur Laufrichtung (Transportrichtung) 18 des Einlaufbands 10, d.h. in y-Richtung 21 der Figur 1c, bewegt werden. Die Shuttleelemente 26 mit Eingriffselementen 13 sind hintereinander auf dem Schienensystem 15 angeordnet und können mithilfe des Langstatorlinearmotors 14 in oder entgegen der Transportrichtung 18 bewegt werden. Die Eingriffselemente 13 dienen der Überschiebung von ausgewählten Behältern 1 von dem Einlaufband 10 auf das Zwischenband 11 beziehungsweise die Behälterannahmeeinrichtung 12.

Der Eingriff der Eingriffselemente 13 in den Behälterstrom 2 der Behälter 1 ist in Figur 2 veranschaulicht. Der Eingriff kann von oben (aus z-Richtung) und/oder senkrecht zur Transportrichtung 18 (aus y-Richtung) erfolgen, und er kann derart erfolgen, dass zunächst keine Berührung eines Behälters 1 auf dem Einlaufband 10 erfolgt. Hierzu kann das Portalsystem 16, 17 den Langstatorlinearmotor A mit den Shuttleelemente 26 entsprechend bewegen. Die Steuerung des Eingriffs kann über eine nicht gezeigte Steuerungseinrichtung der Vorrichtung 100 erfolgen.

Figur 3 veranschaulicht einen Überschub von Behältern 1 von dem Einlaufband 10 auf das ebenfalls in Transportrichtung 18 laufende Zwischenband 11, das beispielsweise mit derselben Geschwindigkeit wie das Einlaufband laufen kann. In den gezeigten Beispielen weisen die Eingriffselemente 13 eine L-förmige Geometrie auf, wobei ein Teil des Ls parallel zu der Transportrichtung 18 und der andere Teil des Ls senkrecht dazu angeordnet ist.

Im Betrieb können die Eingriffselemente 13 den zu manipulierenden Behältern 1 aufsynchronisiert werden, sodass jedem zu manipulierenden Behälter 1 ein Shuttleelement 26 mit Eingriffselement 13 zugeordnet wird. Nach der Synchronisation bewegen sich die Behälter 1 auf dem Einlaufband 10 und die Shuttleelemente 26 des Langstatormotorsystems A parallel zueinander mit der gleichen Geschwindigkeit und Richtung, und es befindet sich der senkrecht zur Transportrichtung 18 ausgerichtete Teil des Ls des Eingriffselements 13 mit relativ geringem Abstand in Transportrichtung 18 vor dem zu manipulierenden Behälter 1, wie es aus den Figuren 2 und 3 ersichtlich ist.

Zum Überschub werden die Behälter 1 von den Eingriffselementen 13 erfasst, wie es in Figur 3 gezeigt ist. Genauer werden die Behälter 1 von dem Einlaufband 10 mit den parallel zur Transportrichtung 18 ausgerichteten Teile des Ls quer zur Transportrichtung auf das Zwischenband 11 überschoben, wobei sie durch die senkrecht zur Transportrichtung 18 ausgerichteten Teile des Ls gestützt werden. In der in Figur 3 gezeigten Position sind die Behälter 1 aus dem Behälterstrom 2 des Einlaufbands 10 entnommen und können unabhängig von demselben weiter manipuliert werden. Beispielsweise können nachfolgend über das Einlaufband 10 einlaufende Behälter die auf das Zwischenband 11 überschobenen Behälter in Transportrichtung 18 überholen.

Die auf das Zwischenband 11 überschobenen Behälter können durch eine von dem Langstatorlinearmotor 14 bewirkte Bewegung der Shuttleelemente 26 ihrerseits mithilfe der Eingriffselemente 13, namentlich mithilfe des senkrecht zur Transportrichtung 18 ausgerichteten Teils des Ls, abgebremst werden oder entgegen der Transportrichtung 18 verschoben werden, wodurch geschlossene Behälterreihen oder Behältergruppen (gruppiert in Transportrichtung 18) auf dem Zwischenband 11 erzeugt werden können. Im Falle relativ großer Lücken 4 im Behälterstrom 2 auf dem Einlaufband 10 kann mithilfe von zwei oder mehr aufeinanderfolgende Überschubvorgänge (Hübe) auf dem Zwischenband 11 eine geschlossene Behälterreihe erzeugt werden.

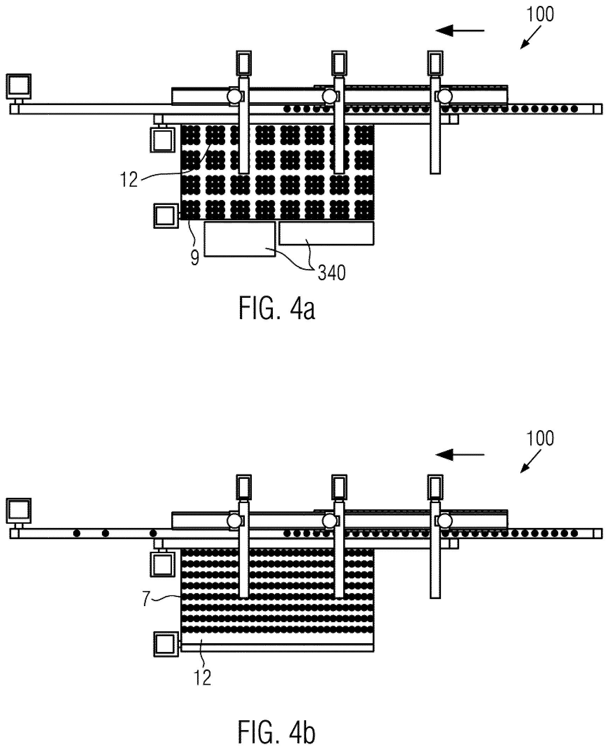

Mithilfe der Shuttleelemente 26 mit den Eingriffselemente 13 können die auf das Zwischenband 11 überschobenen Behälter weiter quer zur Transportrichtung 18 auf die Behälterannahmeeinrichtung 12 überschoben werden. Beispielsweise kann hierzu das Langstatormotorsystem A durch das Portalsystem 16, 17 senkrecht zur Transportrichtung 18 (x-Richtung) in y-Richtung bewegt werden. Insbesondere können in Transportrichtung 18 gruppierte Behälter von dem Zwischenband 11 auf die Behälterannahmeeinrichtung 12 überschoben werden, wie es in Figur 4a gezeigt ist, oder es kann eine in Transportrichtung 18 geschlossenen Behälterreihe 7 von dem Zwischenband 11 auf die Behälterannahmeeinrichtung 12 überschoben werden, wie es in Figur 4b gezeigt ist. Auf der Behälterannahmeeinrichtung 12 können die Behälter senkrecht zur Transportrichtung weiterbewegt, insbesondere gruppiert, werden. So können in x- und y-Richtung gruppierte Behältergruppen 9 beziehungsweise in y-Richtung gruppierte und in x-Richtung geschlossene Behälterreihen 7 auf der Behälterannahmeeinrichtung 12 erzeugt werden (siehe Figuren 4a und 4b). Die Gruppierung der Behälter auf der Behälterannahmeeinrichtung 12 kann durch eine entsprechende Taktung sich in y-Richtung (beispielsweise auf einem umlaufenden Band) bewegender Trägerelemente erreicht werden.

Die weiterbewegten/gruppierten Behälter können sodann von der Behälterannahmeeinrichtung 12 einer Bearbeitungsstation, beispielsweise einer oder wahlweise mehreren Verpackungsmaschinen mit unterschiedlichen Verpackungsformaten, zugeführt werden. Es kann auch vorgesehen sein, dass die Behälter nach der Gruppierung auf der Behälterannahmeeinrichtung 12 von einem oder mehreren fahrerlosen Transportsystemen (FTS) oder Automated Guided Vehicles (AGV) 340 von gegebenenfalls unterschiedlicher Größe aufgenommen werden, oder sie können auf der Behälterannahmeeinrichtung 12 palettiert werden, sodass die Paletten von einem FTS/AGV 340 abgeholt werden können. Das FTS/AGV 340 kann beispielsweise die Paletten in mehreren Ebene übernehmen und speichern und es kann zeitgleich oder zeitlich versetzt die Behälterannahmeeinrichtung 12 mit Leerpaletten beliefern.

Nachdem die Behälter von dem Zwischenband 11 auf die Behälterannahmeeinrichtung 12 überschoben worden sind, wird das Langstatormotorsystem A mit dem Langstatorlinearmotor 14, dem Schienensystem 15, den Shuttleelementen 26 mit den Eingriffselementen 13 durch das Y-Z-Linearachsenportalsystem 16, 17 vertikal (in z-Richtung) auf eine Höhe angehoben, auf der die Unterkanten der Eingriffselemente 13 über der Höhe der Oberkanten neu auf dem Einlaufband 10 einlaufender Behälter liegt, und es werden die Shuttleelemente entgegen der Transportrichtung 18 und der y-Richtung in Ausgangsposition zurückbewegt, sodass ein neuer Gruppierungsvorgang ausgeführt werden kann.

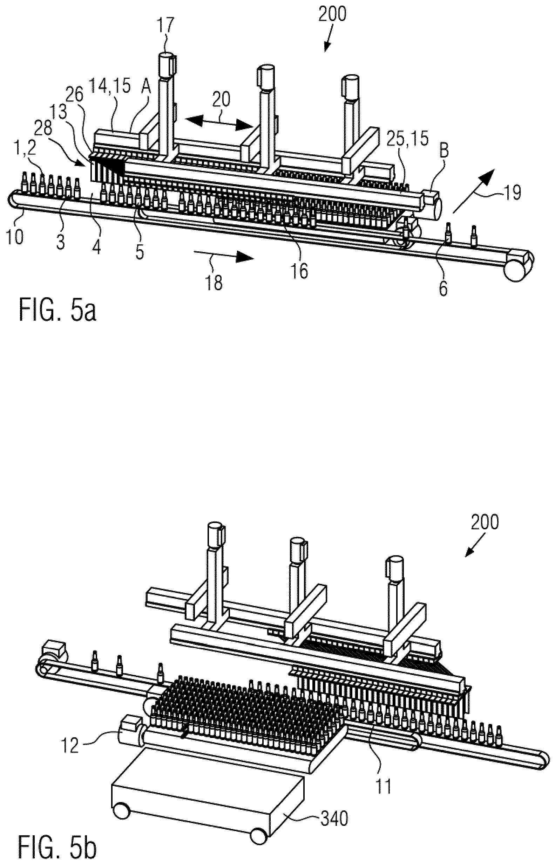

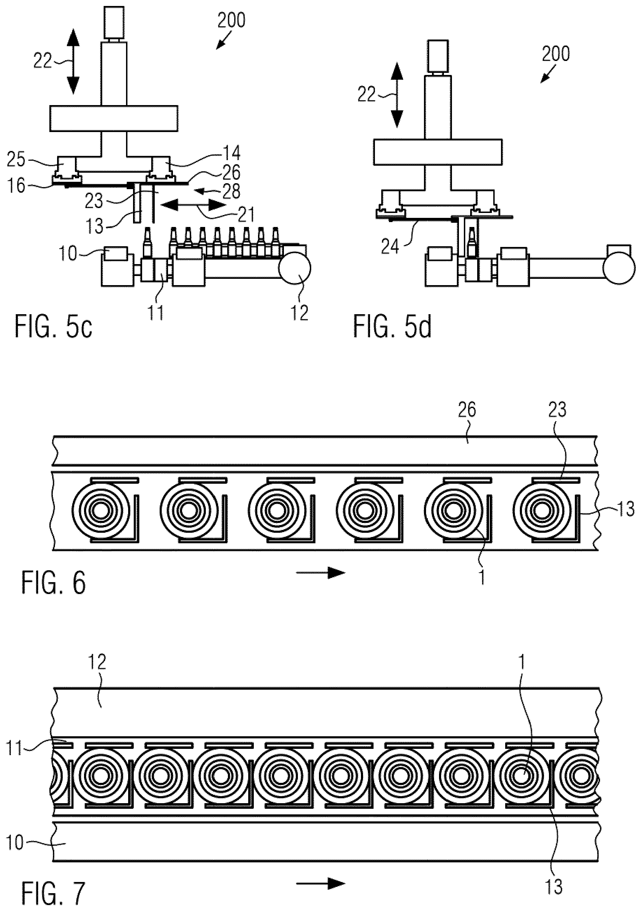

Ein Beispiel für eine erfindungsgemäße Vorrichtung 200 zur Gruppierung von Behältern ist in den Figuren 5a, 5b, 5c und 5d gezeigt. Elemente, die denen gleich sind, die in den Figuren 1a bis 1c gezeigt sind, weisen die gleichen Bezugszeichen auf. Die Beschreibung der Figuren 1a bis 1c gilt entsprechend. Im Unterschied zu der in den Figuren 1a, 1b und 1c gezeigten Konfiguration weist die in den Figuren 5a bis 5d gezeigte Vorrichtung 200 zwei Langstatormotorsysteme A, B, jeweils mit einem Langstatorlinearmotor 14, 25 und einem Schienensystem 15 auf. Die Langstatormotorsysteme A, B sind in Transportrichtung 18 parallel zueinander und versetzt zueinander angeordnet. Shuttleelemente 16, 26 beider Langstatormotorsysteme A, B können durch die Langstatorlinearmotor 14, 25 in eine Bewegungsrichtung 20 parallel zur Transportrichtung 18 bewegt werden.

Die Shuttleelemente 26 des Langstatormotorsystems A weisen Eingriffselemente (Paddel) 13 auf, die den oben beschriebenen gleichen. Die Shuttleelemente 26 des Langstatormotorsystems A mit den Eingriffselementen (Paddel) 13 stellen eine Überschubeinrichtung 28 dar. Die Shuttleelemente 16 des Langstatormotorsystems B weisen keine derartigen Eingriffselemente auf. Die Shuttleelemente 16 des Langstatormotorsystems B sind mit den Eingriffselementen 13 der Shuttleelemente 26 des Langstatormotorsystems A über Koppelstangen 24 verbunden, wie es in Figur 5c gezeigt ist. Die Verbindung durch die Koppelstangen 24 ist derart, dass die Eingriffselemente 13 durch eine Erhöhung des Abstands zwischen den Shuttleelementen der Langstatormotorsysteme A, B in Transportrichtung 18 quer zur Transportrichtung 18 verschoben werden.

Wie in dem in Figur 3 gezeigten Beispiel können die Eingriffselemente 13 L-förmig sein (siehe Figur 6). Die Eingriffselemente 13 sind an entsprechenden Shuttleelementen 26 befestigt, die die sich in dem Schienensystem 15 des Langstatormotorsystems A bewegen können und weiterhin parallel zur Transportrichtung 18 ausgerichtete Gegenhalteelemente 23 aufweisen (siehe Figur 6). Natürlich können solche Gegenhalteelemente 23 auch in der in Figur 3 gezeigten Konfiguration vorgesehen sein. Die auf dem Einlaufband 10 einlaufenden Behälter 1 des Behälterstroms 2 laufen dann nach Synchronisation zwischen den Eingriffselementen 13 und den Gegenhalteelementen 23 (siehe Figur 5c). Nach der Synchronisation bewegen sich die Behälter 1 auf dem Einlaufband 10 und die Shuttleelemente 26 des Langstatormotorsystems A wie auch die Shuttleelemente 16 des Langstatormotorsystems B parallel zueinander mit der gleichen Geschwindigkeit und Richtung, und es befindet sich der senkrecht zur Transportrichtung 18 ausgerichtete Teil des Ls des Eingriffselements 13 mit relativ geringem Abstand in Transportrichtung 18 vor dem zu manipulierenden Behälter 1, wie es aus Figur 6 ersichtlich ist.

Mithilfe der Eingriffselemente 13 und Gegenhalteelemente 23 können Behälter 1 von dem Einlaufband 10 auf das Zwischenband 11 und von dort auf die Behälterannahmeeinrichtung 12 überschoben werden (siehe Figur 7). Während des Überschiebevorgangs bewegen sich das Gegenhalteelement 23, der Teil des L-förmigen Eingriffselements 13, der parallel zur Transportrichtung 18 ausgerichtet ist, und der Teil des L-förmigen Eingriffselements 13, der senkrecht zur Transportrichtung 18 ausgerichtet ist, synchron, sodass der manipulierte Behälter zum sicheren Überschub durchgehend von drei Seiten gestützt bleibt.

Die Bewegung der Eingriffselemente 13 senkrecht zur Transportrichtung 18, wird durch eine Vergrößerung des Abstands zwischen miteinander gekoppelten Shuttleelementen 26 des Langstatormotorsystems A und Shuttleelemente 16 des Langstatormotorsystems B durch eine entsprechend gesteuerte Bewegung der Shuttleelementen 16 durch den Langstatorlinearmotor 14 und/oder der Shuttleelementen 26 durch den Langstatorlinearmotor 25 verursacht.

Die auf das Zwischenband 11 überschobenen Behälter können ihrerseits mithilfe der Eingriffselemente 13, namentlich mithilfe des senkrecht zur Transportrichtung 18 ausgerichteten Teils des Ls, abgebremst werden oder entgegen der Transportrichtung 18 verschoben werden, wodurch geschlossene Behälterreihen oder Behältergruppen (gruppiert in Transportrichtung 18) auf dem Zwischenband 11 erzeugt werden können.

Auch in der Vorrichtung 200 können, wie oben mit Bezug auf die in den Figuren 1a bis 1c gezeigten Vorrichtung 100 beschrieben, die auf das Zwischenband 11 überschobenen Behälter weiter quer zur Transportrichtung 18 auf die Behälterannahmeeinrichtung 12 überschoben werden. Insbesondere können in Transportrichtung 18 gruppierte Behälter von dem Zwischenband 11 auf die Behälterannahmeeinrichtung 12 überschoben werden, oder es kann eine in Transportrichtung 18 geschlossenen Behälterreihe von dem Zwischenband 11 auf die Behälterannahmeeinrichtung 12 überschoben werden. Auf der Behälterannahmeeinrichtung 12 können die Behälter senkrecht zur Transportrichtung weiterbewegt, insbesondere gruppiert, werden. So können in x- und y-Richtung gruppierte Behältergruppen 9 beziehungsweise in y-Richtung gruppierte und in x-Richtung geschlossene Behälterreihen 7 erzeugt werden, wie es bereits zuvor mit Bezug auf die Figuren 4a und 4b beschrieben wurde.

Sowohl die in den Figuren 1a bis 1c gezeigte Vorrichtung 100 als auch die in den Figuren 5a bis 5d gezeigte Vorrichtung 200 erlaubt eine zuverlässige gewünschte Behältergruppierung ohne Unterbrechung eines nachfolgend auf dem Einlaufband 10 angelieferten Behälterstroms. Die Vorrichtungen 100 und 200 können jeweils mehr als ein Einlaufband 10 und/oder Zwischenband 11 aufweisen, sodass der Behälterannahmeeinrichtung 12 wahlweise verschiedene Behältertypen zugeführt werden können. Durch die Gruppierung auf dem Zwischenband 11 können beliebig große Lücken 4 in dem Behälterstrom 2 auf dem Einlaufband 10 abgepuffert werden.

Es kann also jeweils ein Behälterstrom 2 mit relativ kleinen Teilungslücken 3 und relativ großen Lücken 4, die beispielsweise durch verlorengegangene Behälter erzeugt werden, sowie mit schadhaften Behälter 6 derart bearbeitet werden, dass schadhafte Behälter 6 auf dem Einlaufband ohne Manipulation ausgeleitet werden und gruppierte Behälterformationen von der Behälterannahmeeinrichtung 12 zur weiteren Verarbeitung bereitgestellt werden. Zur weiteren Verarbeitung können die Vorrichtungen 100 und 200 eine oder mehrere Arbeitsstationen, beispielsweise Verpackungsstationen, stromabwärts der Behälterannahmeeinrichtung 12 aufweisen.

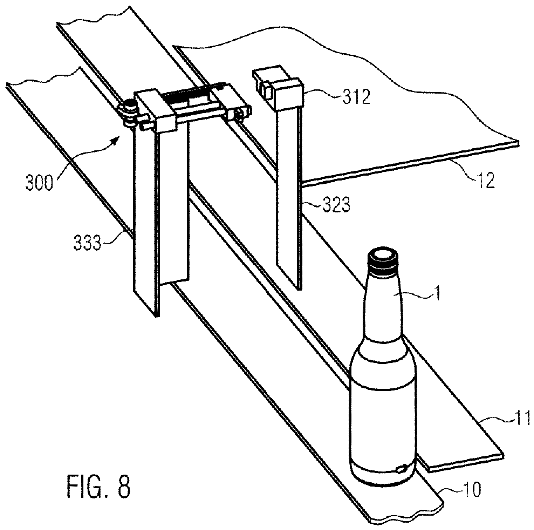

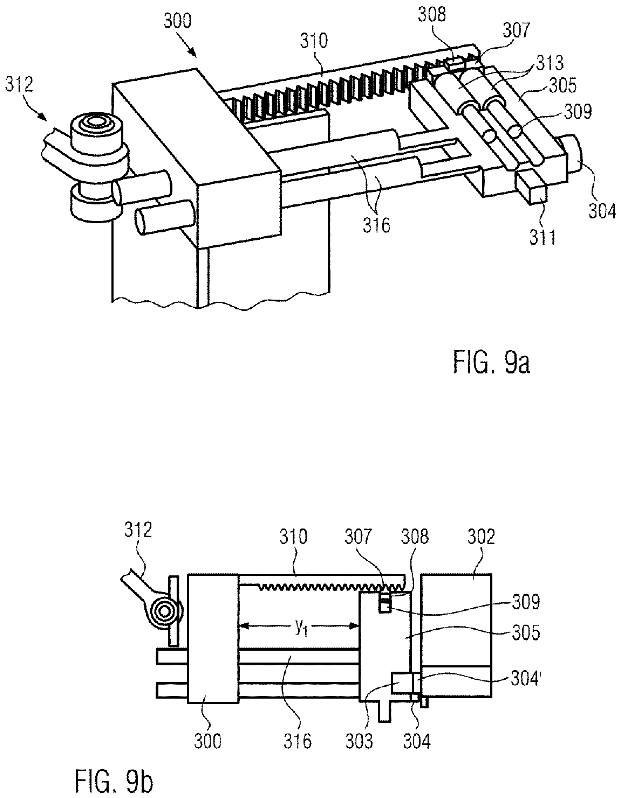

Wie oben beschrieben erfolgt die Manipulation der Behälter mithilfe einer Überschubeinrichtung mit Eingriffselementen. In Folgenden wird ein besonderes Beispiel einer Ausführung eines Teils einer Überschubeinrichtung beschrieben. Figur 8 zeigt einen Behälter 1, in diesem Fall beispielhaft eine Kunststofflasche, auf einem Einlaufband 10. Ebenfalls sind ein Zwischenband 11 und eine Behälterannahmeeinrichtung 12 angedeutet (vgl. Beschreibung oben). Eine Schiebeeinrichtung 300 umfasst ein L-förmiges Eingriffselement 333 zum Überschieben des Behälters 1 auf das Zwischenband 11. An einem Gegenhalter 302 ist ein Gegenhalteblech 312 angebracht. In Figur 8 ist die Schiebeeinrichtung 300 in einem geöffneten Zustand, in dem der Behälter auf dem Einlaufband 10 passieren kann, gezeigt. Details der Schiebeeinrichtung 300 sind in den Figuren 9a und 9b veranschaulicht.

Bewegt werden kann die Schiebeeinrichtung 300 über einen Verschiebemechanismus 312, der mit einem der oben genannten bewegliche Satellitenelementen 26 verbunden ist. So können gemäß diesem Beispiel die Schiebeeinrichtung 300 mit ihrem ihr zugeordneten Satellitenelement 26 eine Überschubeinrichtung bilden. Durch eine von dem Satellitenelement vermittelten Bewegung quer zur Laufrichtung des Einlaufbands 10 kann mithilfe der Eingriffselemente 333 und des Gegenhalteblechs 312 ein Behälter von dem Einlaufband 10 auf das Zwischenband 11 überschoben werden. Ein verschiebbarer Abstandshalter 305 ist auf Führungen 316 beweglich gelagert.

Der verschiebbare Abstandshalter 305 erlaubt die Anpassung an variierende Behälterabmessungen von zu manipulierenden Behältern 1. Ein gewählter Abstand y1 kann dadurch eingestellt werden, dass eine Arretierung 317, die in dem Abstandshalter 305 gelagert ist, mithilfe einer Feder 313 auf eine Zahnstange 310 gedrückt wird. Der Abstandshalter 305 kann mithilfe eines Magneten 304 an einem Gegenhalter 312, an dem das Gegenhalteblech 323 befestigt ist, fixiert werden. Der Gegenhalter 312 weist seinerseits einen Magneten 304' unterhalb eines Anschlags 303 auf. Der resultierende geschlossene Zustand der Schiebeeinrichtung 300, in dem ein Behälter 1 manipuliert werden kann, ist in Figur 9b in Draufsicht gezeigt. In diesem Zustand kann ein Behälter 1 sicher von dem Einlaufband 10 zu dem Zwischenband 11 und der Behälterannahmeeinrichtung 12 überschoben werden, wobei er von dem L-förmigen Eingriffselement 333 und dem Gegenblech 323 gegen ein Umfallen gestützt werden kann.

Wenn zwei Schiebeeinrichtungen 300 entlang einem Schienensystems, beispielsweise entlang eines Schienensystems eines Langstatormotorsystems (siehe oben), in x-Richtung, d.h. parallel zur Laufrichtung des Einlaufbands 10, zusammenfahren, drückt der Verstellstift 311 einer der beiden Schiebeeinrichtungen 300 auf einen entsprechenden Verstellflansch 308 der anderen der beiden Schiebeeinrichtungen 300, wodurch die in x-Richtung gelagerte Arretierung 307 in die Feder 313 gedrückt wird, sodass die Verbindung zwischen der Arretierung 307 und der Zahnstange 310 gelöst wird. Wenn sich die beiden Schiebeeinrichtungen 300 wieder voneinander entfernen drückt die Feder 313 die Arretierung 307 wieder in Zahnstange 310 zurück, sodass wieder ein sicher geschlossener Zustand der Schiebeeinrichtung 300 erhalten werden kann.

## Patentansprüche

1. Vorrichtung (100, 200) zum Gruppieren von Behältern, mit
einem ersten Transportband (10) zum Transportieren der Behälter (1) in einer ersten Transportrichtung (18);
einer Behälterannahmeeinrichtung (12);
einem zweiten Transportband (11), das zwischen dem ersten Transportband (10) und der Behälterannahmeeinrichtung (12) angeordnet ist;
einer Überschubeinrichtung (28), die dazu ausgebildet ist, zumindest einige der Behälter (1) quer zu der ersten Transportrichtung (18) von dem ersten Transportband (10) auf das zweite Transportband zu überschieben und zumindest einen Teil der auf das zweite Transportband überschobenen Behälter (1) quer zu der ersten Transportrichtung (18) auf die Behälterannahmeeinrichtung (12) zu überschieben;
einem ersten Schienensystem, das parallel zu der ersten Transportrichtung (18) ausgerichtet ist;
einem zweiten Schienensystem, das parallel zu der ersten Transportrichtung (18) ausgerichtet ist;
einer ersten Motoreinrichtung (14), insbesondere einer Langstatormotoreinrichtung, die oberhalb des ersten Transportbands (10), des zweiten Transportbands (11) und der Behälterannahmeeinrichtung (12) angeordnet ist, und die dazu ausgebildet ist, die Überschubeinrichtung (28) zum Überschieben der jeweiligen Behälter (1) zu bewegen, wobei die Überschubeinrichtung (28) ein entlang dem ersten Schienensystem bewegliches erstes Shuttleelement mit einer Anzahl an Eingriffselementen, von denen sich jedes zumindest teilweise quer zu der ersten Transportrichtung (18) erstreckt, umfasst, sodass die Überschubeinrichtung (28) mithilfe der Eingriffselemente zu einer Gruppierung der jeweiligen Behälter (1) auf dem zweiten Transportband (11) und/oder der Behälterannahmeeinrichtung (12) und dem Überschieben der jeweiligen Behälter (1) ausgebildet ist; und einer zweiten Motoreinrichtung (25), insbesondere einer zweiten Langstatormotoreinrichtung, die oberhalb des ersten Transportbands (10), des zweiten Transportbands (11) und der Behälterannahmeeinrichtung (12) angeordnet ist und dazu ausgebildet ist, ein zweites Shuttleelement entlang dem zweiten Schienensystem zu bewegen, und wobei das zweite Shuttleelement mit dem ersten Shuttleelement, insbesondere über eine Koppelstange, gekoppelt ist, sodass durch eine Relativbewegung des gekoppelten ersten und zweiten Shuttleelements in der ersten Transportrichtung die Eingriffselemente quer zu der ersten Transportrichtung geführt werden können,
**dadurch gekennzeichnet, dass**
die zweite Motoreinrichtung (25) in der ersten Transportrichtung (18) gegenüber der ersten Motoreinrichtung (14) versetzt angeordnet ist.

2. Vorrichtung (100, 200) gemäß Anspruch 1, in der die Überschubeinrichtung (28) dazu ausgebildet ist, die auf das zweite Transportband überschobenen Behälter (1) abzubremsen und/oder entgegen der ersten Transportrichtung (18) zu verschieben und/oder zu gruppieren.

## Claims

1. Device (100, 200) for grouping containers (1), comprising
a first conveyor belt (10) for transporting the containers (1) in a first transport direction (18);
a container receiving device (12);
a second conveyor belt (11) which is arranged between the first conveyor belt (10) and the container receiving device (12);
a transfer device (28) which is configured to transfer at least some of the containers (1) from the first conveyor belt (10) to the second conveyor belt transversely to the first transport direction (18), and to transfer at least some of the containers (1) transferred to the second conveyor belt to the container receiving device (12) transversely to the first transport direction (18);
a first rail system oriented in parallel to the first transport direction (18);
a second rail system oriented in parallel to the first transport direction (18);
a first motor device (14), in particular a long stator motor device, which is arranged above the first conveyor belt (10), the second conveyor belt (11), and the container receiving device (12), and which is configured to move the transfer device (28) for transferring the respective containers (1), wherein the transfer device (28) comprises a first shuttle element movable along the first rail system with a number of engagement elements of which each at least partially extends transversely to the first transport direction (18), so that the transfer device is configured, by means of the engagement elements, to group the respective containers (1) on the second conveyor belt (11) and/or the container receiving device (12) and to transfer the respective containers (1); and
a second motor device (25), in particular a second long stator motor device, which is arranged above the first conveyor belt (10), the second conveyor belt (11) and the container receiving device (12) and which is configured to move a second shuttle element along the second rail system, and wherein the second shuttle element is coupled to the first shuttle element, in particular via a coupling rod, such that by a relative movement of the coupled first and second shuttle elements in the first transport direction the engagement elements can be guided transversely to the first transport direction;
**characterized in that**
the second motor device (25) is arranged offset, in the first transport direction (18), with respect to the first motor device (14).

2. Device (100, 200) according to claim 1, wherein the transfer device (28) is configured to slow down the containers (1) transferred to the second conveyor belt and/or shift them against the first transport direction (18) and/or group them.

## Revendications

1. Dispositif (100, 200) de regroupement de récipients, avec
une première bande transporteuse (10) pour transporter les récipients (1) dans une première direction de transport (18) ;
un dispositif de réception de récipients (12) ;
une deuxième bande transporteuse (11) agencée entre la première bande transporteuse (10) et le dispositif de réception de récipients (12) ;
un dispositif de transfert (28) qui est conçu pour transférer au moins certains des récipients (1) transversalement à la première direction de transport (18) de la première bande transporteuse (10) à la deuxième bande transporteuse et pour transférer au moins une partie des récipients (1) transférés sur la deuxième bande transporteuse transversalement à la première direction de transport (18) au dispositif de réception de récipients (12) ;
un premier système de rails aligné parallèlement à la première direction de transport (18) ;
un deuxième système de rails aligné parallèlement à la première direction de transport (18) ;
un premier dispositif moteur (14), en particulier un dispositif moteur à stator long, qui est agencé au-dessus de la première bande transporteuse (10), de la deuxième bande transporteuse (11) et du dispositif de réception de récipients (12), et qui est conçu pour déplacer le dispositif de transfert (28) afin de transférer les récipients respectifs (1), dans lequel le dispositif de transfert (28) comprend un premier élément de navette mobile le long du premier système de rails avec un certain nombre d'éléments d'engagement, dont chacun s'étend au moins partiellement transversalement à la première direction de transport (18), de telle sorte que le dispositif de transfert (28) est conçu à l'aide des éléments d'engagement pour un regroupement des récipients respectifs (1) sur la deuxième bande transporteuse (11) et/ou le dispositif de réception de récipients (12) et pour transférer les récipients respectifs (1) ; et
un deuxième dispositif moteur (25), en particulier un deuxième dispositif moteur à stator long, qui est agencé au-dessus de la première bande transporteuse (10), de la deuxième bande transporteuse (11) et du dispositif de réception de récipients (12), et qui est conçu pour déplacer un deuxième élément de navette le long du deuxième système de rails, et dans lequel le deuxième élément de navette est couplé au premier élément de navette, en particulier via une tige d'accouplement, de telle sorte que les éléments d'engagement peuvent être guidés transversalement à la première direction de transport par un déplacement relatif des premier et deuxième éléments de navette couplés dans la première direction de transport,
**caractérisé en ce que**
le deuxième dispositif moteur (25) est agencé de manière décalée dans la première direction de transport (18) par rapport au premier dispositif moteur (14).

2. Dispositif (100, 200) selon la revendication 1, dans lequel le dispositif de transfert (28) est conçu pour freiner les récipients (1) transférés sur la deuxième bande transporteuse et/ou pour les décaler et/ou les regrouper en sens inverse de la première direction de transport (18).
